# EUROPÄISCHE PATENTSCHRIFT

(11) **EP 0 872 377 B1**
(45) Veröffentlichungstag und Bekanntmachung des Hinweises auf die Patenterteilung: **12.09.2001**
(21) Anmeldenummer: 98106437.1
(22) Anmeldetag: 08.04.1998
(51) Int. Cl.: B60N 3/10

(54) **Halterungsvorrichtung, insbesondere für Getränkedosen, -flaschen und Trinkgefässe in Kraftfahrzeugen**
Holding device, particularly for beverage cans, bottles and drinking containers in motor cars
Dispositif pour maintenir, en particulier des boîtes de boisson, bouteilles et conteneurs à boissons dans des véhicules automobiles

(30) Priorität: 16.04.1997 DE 29706803 U
(43) Veröffentlichungstag der Anmeldung: 21.10.1998
(73) Patentinhaber: KUNSTSTOFFTECHNIK RIESSELMANN GmbH & Co. KG, 01458 Ottendorf-Okrilla (DE)
(72) Erfinder: Müller, Roland Dipl.Ing., 01458 Ottendorf-Okrilla (DE); Richard, Ulf Dipl.Ing., 15234 Frankfurt /O. (DE)
(74) Vertreter: Tragsdorf, Bodo, Dipl.-Ing.

(56) Entgegenhaltungen:
- EP-A- 0 463 306
- EP-A- 0 716 958
- DE-A- 4 135 316
- DE-A- 4 441 265

## Beschreibung

Die Erfindung betrifft eine Halterungsvorrichtung, insbesondere für Getränkedosen, -flaschen und Trinkgefäße in Kraftfahrzeugen.

Im Automobilbau gehört es bereits zum Standard der Innenausstattung, daß entsprechende Getränkedosenhalter vorgesehen sind, die den Personen im Fahrzeug während der Fahrt die Einnahme von Getränken erleichtern sollen, indem die Trinkgefäße und die Dosen oder Flaschen in speziell dafür geeigneten Halterungen abgestellt bzw. aufbewahrt werden können. Aus der Praxis sind vor allem Getränkedosenhalter bekannt, die im Cockpitbereich des Fahrzeuges versenkbar angeordnet sind, z.B. durch Schwenk- oder Hubbewegungen.
Technischer Stand ist dabei die Steuerung des automatischen Bewegungsablaufes durch eine Triebfeder bei gleichzeitiger Verzögerung durch Silikondämpfer.
Dieses Funktionsprinzip stellt hohe Anforderungen an das Führungselement des Getränkedosenhalters. Insbesondere die Gewährleistung der Klemm- und Spielfreiheit über den gesamten Temperaturbereich von -40° C bis +80° C stellt besonders hohe Anforderungen an die Gestaltung der Führung. Gleichzeitig muß das Führungselement die in der Gebrauchslage auftretenden Belastungen von bis zu 100 N (senkrecht zur Linearbewegung) zerstörungsfrei aufnehmen und weiterleiten können. Dazu ist eine genügend große Überdeckung der Führungselemente des beweglichen Schieberteiles und des feststehenden Gehäuses in der Gebrauchslage erforderlich, was gleichzeitig ein entsprechendes Tiefenmaß im eingefahrenen Zustand bedingt.
In vielen Fällen, wie z.B. im Cockpitbereich, im Bereich der Türen oder der Rückenlehne der Sitze, steht jedoch der erforderliche Raum in der Tiefe nicht zur Verfügung.
Die bekannten versenkbaren Getränkedosenhalter sind außerdem in ihrem konstruktiven Aufbau kompliziert und somit auch in ihrer Herstellung sehr aufwendig und dadurch kostenintensiv.
Aus der DE 41 35 316 A 1 ist eine Halterungsvorrichtung für Behältnisse in Kraftfahrzeugen bekannt, das aus einem Gehäuse mit zwei parallelen Seitenwänden und einer teleskopartigen Führung besteht. Das Gehäuse mit den Seitenwänden bildet den stationären Teil der Führung. In diesem ist als erstes bewegliches Teil ein rechteckförmiges Verlängerungsteil geführt. In dem Verlängerungsbauteil ist als zweites bewegliches Teil ein plattenförmiges Bauteil geführt, an dessen überstehendem Abschnitt sich die Öffnung zur Aufnahme der Behältnisse befindet. Jeweils am vorderen Ende des Gehäuses und des Verlängerungsbauteils sind Anschläge zur Begrenzung der Bewegung des Verlängerungsbauteils und des plattenförmigen Bauteils in die Gebrauchslage angeordnet. Das Verlängerungsteil und das in diesem geführte plattenförmige Teil erstrecken sich über nahezu die gesamte Breite der Halterungsvorrichtung.
Die Nachteile dieser Halterungsvorrichtung bestehen vor allem in der Ausbildung der Seitenwände als Führungen für die in die Gebrauchslage zu bewegenden Bauteile. Die Seitenwände müssen in der Gebrauchslage die gesamten Belastungskräfte aufnehmen. Die Telekopfühgrung beansprucht in ihrer Einbaubreite die gesamte Gehäusebreite und ist somit in ihrer Herstellung sehr aufwendig. Die Anordnung der Führungen in den Seitenwänden erfordert die Einhaltung enger Fertigungstoleranzen. Bereits herstellungsbedingte kleinste Lage- und Formabweichungen, wie z.B. Verzug bei Kunststoffbauteilen, können zu Funktionsstörungen im Bewegunsablauf führen.

Der Erfindung lag die Aufgabe zugrunde, eine Halterungsvorrichtung, insbesondere für Getränkedosen, -flaschen und Trinkgefäße in Kraftfahrzeugen zu schaffen, die sich durch einen sehr einfachen Aufbau auszeichnet und trotzdem den gestellten hohen technischen Anforderungen gerecht wird, kostengünstig herstellbar ist und nur eine geringe Einbautiefe erfordert.

Erfindungsgemäß wird die Aufgabe durch die im Anspruch 1 angegebenen Merkmale gelöst. Geeignete Ausführungsvarianten sind in den Ansprüche 2 bis 7 angegeben. Die Halterungsvorrichtung besteht aus einem Halterungsteil mit den Aufnahmeöffnungen für die zu haltenden Behältnisse, das in einem Gehäuse durch Schubbewegung versenkbar angeordnet ist, wobei zur Ausführung der erforderlichen Schubbewegung nur eine zentrale Führung vorgesehen ist. Diese besteht aus einem stabförmigen Führungselement, das biegesteif mittig in der Rückwand des Gehäuses befestigt ist und in einer Hülse geführt ist, die in dem Halterungsteil mittig zwischen den benachbarten Aufnahmeöffnungen für die Behältnisse versenkbar angeordnet ist. Die Schubbewegungen der axialbeweglichen Bauteile, des Halterungsteiles und der Hülse, sind durch entsprechende Anschläge begrenzt. Die Hülse ist in ihrer Länge so bemessen, daß sie nur geringfügig kürzer ist als die vorhandene Tiefe des Halterungsteiles und somit in diesem vollständig versenkbar ist, wenn das Halterungsteil vollständig in das Gehäuse eingeschoben ist. Wesentlich ist auch, daß das stabförmige Führungselement in seiner Länge nur 5 bis 10 % kürzer ist als die Gehäusetiefe a. Die beiden Anschläge, einerseits zwischen dem Führungselement und der Hülse und andererseits zwischen der Hülse und dem Halterungsteil, sind so aufeinander abgestimmt, daß die maximale Schubbewegung I des Halterungsteiles um 10 bis 20 % kürzer ist als die Gehäusetiefe a. Demzufolge ist die erforderliche Gehäuseeinbautiefe nur um 10 bis 20 % größer als die erforderliche Tiefe oder Länge des Halterungsteiles für die Behältnisse. Der räumliche Platzbedarf der Halterungsvorrichtung in der Einbautiefe ist somit nicht viel größer als die Wegstrecke der beweglichen Teile, des Halterungsteiles und der Hülse. Das Gehäuse besteht aus einem Boden, der Rückwand und den zwei Seitenwänden. Die Seitenwände können relativ dünnwandig ausgebildet werden, da diesen keine tragende Funktion zukommt, sie dienen lediglich als seitliche Begrenzung für das bewegliche Halterungsteil. Die auftretenden Belastungen in der Gebrauchslage werden ausschließlich von dem Halterungsteil, der Hülse und dem stabförmigen Führungselement aufgenommen und in die Gehäuserückwand weitergeleitet. Dazu ist es erforderlich, daß das stabförmige Führungselement biegesteif ist und ohne Passungsspiel in der Rückwand befestigt ist. Der Bereich der Rückwand, an dem das Führungselement befestigt ist, ist entsprechend stabil ausgebildet. Es hat sich als vorteilhaft erwiesen, wenn das Führungselement und die Hülse und somit auch die Führung in dem Halterungsteil einen kreisförmigen Querschnitt aufweisen. Dieser ist am besten geeignet, um die durch äußere Krafteinwirkung eingeleiteten Biegemomente aufzunehmen und weiterzuleiten. Das Führungselement kann ein Metallstab sein oder aus Kunststoff bestehen. Alle anderen Bauteile der Halterungsvorrichtung können kostengünstig aus Kunststoff hergestellt werden. Die Einhaltung der erforderlichen engen Toleranzen für die beweglichen Bauteile der Führung stellt dabei kein Problem dar. Da für die Schubbewegungen des Halterungsteiles nur eine einzige Führung benötigt wird, können die Herstellungs- und Montagekosten erheblich gesenkt werden. Im Vergleich zu bekannten, auf dem Markt befindlichen Getränkedosenhaltern, zeichnet sich die vorgeschlagene Halterungsvorrichtung durch einen sehr einfachen Aufbau aus, ohne nachteilige Auswirkungen auf die Funktionalität. Durch geeignete Materialpaarungen hinsichtlich der zu verwendenden Kunststofftypen werden geringe Reibwerte und ein akustisch ruhiger Bewegungsablauf der zu bewegenden Bauteile erreicht.
An dem Halterungsteil sind nach unten schwenkbare Bügel befestigt, die nach dem Herausziehen des Halterungsteiles in die Gebrauchslage selbsttätig nach unten klappen und als Auflage für die in die Aufnahmeöffnungen eingesetzten Behältnisse dienen. Da die Behältnisse nicht alle den gleichen Durchmesser aufweisen, ist im Randbereich der Öffnungen noch eine elastisches Klemmelement angeordnet. Als elastisches Klemmelement ist z.B. auch eine umlaufende flexible Manschette geeignet.

Die Erfindung soll nachstehend an einem Beispiel näher erläutert werden. In der zugehörigen Zeichnung zeigen
Fig. 1 die Halterungsvorrichtung in perspektivischer Darstellung und
Fig. 2 einen Schnitt gemäß der Linie A-A in Figur 1.

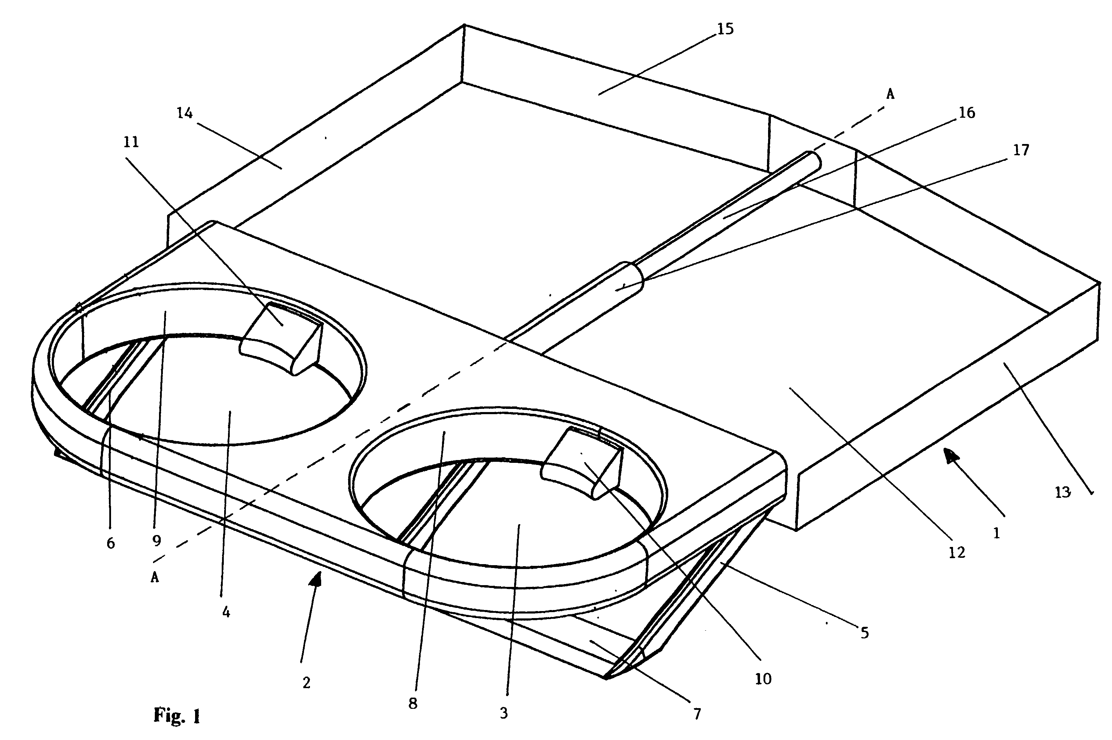

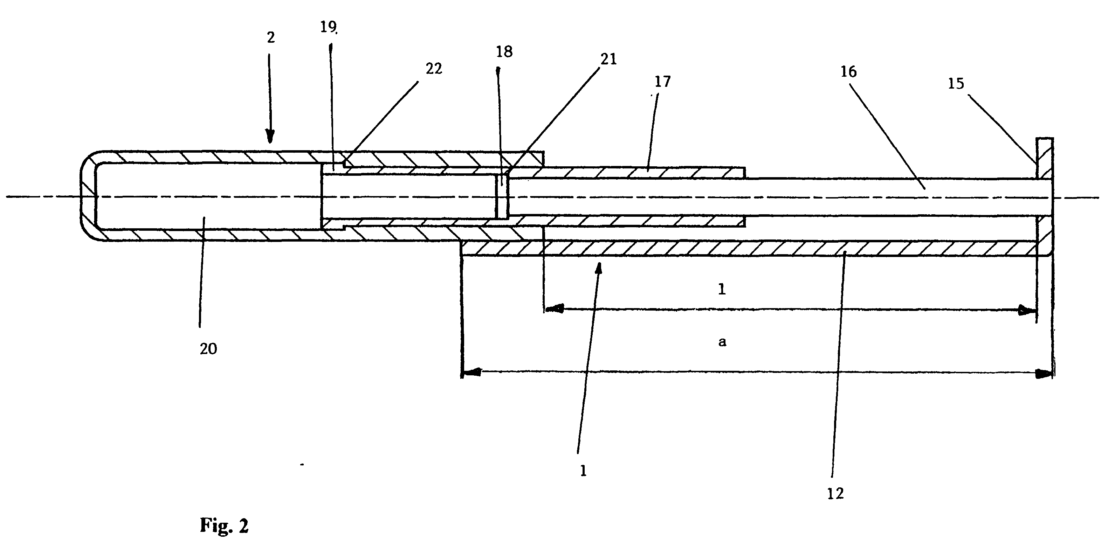

Die Halterungsvorrichtung besteht aus einem Gehäuse 1 und einem Halterungsteil 2, wobei das Halterungsteil 2 durch Schubbewegungen in dem Gehäuse 1 versenkbar ist und wieder in die Gebrauchslage herausbewegbar ist. In der Figur 1 befindet sich das Halterungsteil in der Gebrauchslage. Das Halterungsteil 2 weist zwei Aufnahmeöffnungen 3, 4 auf, in die die jeweiligen Behältnisse, wie z.B. Getränkedose oder Trinkgefäß eingesetzt werden. An der Innenseite des Halterungsteiles 2 sind zwei schwenkbare Bügel 5, 6 befestigt, die beim Herausziehen des Halterungsteiles 2 in die Gebrauchslage selbsttätig nach unten schwenken, wobei der Querverbindungssteg 7 der Bügel 5, 6 als Auflagefläche für die in die Aufnahmeöffnungen 3,4 einzusetzenden Behältnisse dient. In den die Aufnahmeöffnungen 3, 4 begrenzenden Rand 8, 9 sind jeweils elastische Klemmelemente 10,11 angeordnet, die dafür sorgen, daß die in die Aufnahmeöffnungen 3, 4 eingesetzten Behältnisse lagefixiert sind. Beim Einschieben des Halterungsteiles 2 in das Gehäuse 1 werden die Bügel 5, 6 in ihre Ausgangslage zurückbewegt und befinden sich in dem Halterungsteil 2.
Das Gehäuse 1 besteht aus einem Boden 12, zwei Seitenwänden 13, 14 und einer Rückwand 15. An der Rückwand 15 ist mittig ein parallel zu den Seitenwänden 13, 14 verlaufendes, stabförmiges Führungselement 16 biegesteif angeordnet, das als Rundstab ausgebildet ist.
Der Rundstab 16 ist in einer axialbeweglichen Hülse 17 geführt, die mittig in dem Halterungsteil 2 zwischen den beiden Aufnahmeöffnungen 3, 4 versenkbar ist.
Die Einzelheiten der Führung des Halterungsteiles 2 gehen aus der Figur 2 hervor.
Der biegesteife Rundstab 16 weist an seinem freien Ende einen Ringbund 18 als Anschlag auf. Die auf dem Rundstab 16 beweglich geführte Hülse 17 hat einen kreisförmigen Querschnitt und zwei Bereiche unterschiedlicher Innendurchmesser. Der Innendurchmesser des hinteren Bereiches ist dem Außendurchmesser des Rundstabes und der Innendurchmesser des vorderen Bereiches ist dem Außendurchmesser des Ringbundes 18 angepaßt. Die Hülse 17 weist an ihrem vorderen, in Ausziehrichtung zeigenden Ende einen Ringbund 19 auf, der ebenfalls als Anschlag dient. Die Hülse 17 ist in einer kreisrunden Führung 20 des Halterungsteiles 2 beweglich angeordnet. Die Führung 20 hat zwei Bereiche unterschiedlicher Innendurchmesser. Der Innendurchmesser des vorderen Bereiches ist dem Außendurchmesser des Ringbundes 19 und der hintere Bereich dem Außendurchmesser der Hülse 17 angepaßt. Die Hülse 17 ist in ihrer Länge so bemessen, daß sie in der Führung 20 des Halterungsteiles 2 vollständig versenkbar ist, wobei die Länge der Hülse 17 jedoch nur geringfügig kürzer ist als die Tiefe der Führung 20. Der Rundstab 16 mit dem Ringbund 18 ist in seiner Länge um 5 bis 10 % kürzer als die Tiefe a des Gehäuses 1. Die durch die Innendurchmesserreduzierungen in der Führung 20 und in der Hülse 17 gebildeten Anschläge 21, 22 sind so aufeinander abgestimmt, daß die maximale Schubbewegung l des Halterungsteiles 2 in Ausziehrichtung um 10 bis 20 % kürzer ist als die Gehäusetiefe a. Der räumliche Platzbedarf des Gehäuses 1 in der Tiefe ist damit nicht viel größer als die Wegstrecke der axialbeweglichen Teile, der Hülse 17 und des Halterungsteiles 2.
Die erforderliche Einbautiefe für das Gehäuse kann somit auf ein Minimum beschränkt werden. Dadurch ist es möglich, die Halterungsvorrichtung in Bereichen der Innenausstattung von Fahrzeugen anzuordnen, die bisher infolge der nicht ausreichenden Einbautiefe ungeeignet waren.
Im Vergleich zu bisher bekannten Getränkedosenhaltern konnte durch die vorgeschlagene Halterungsvorrichtung die Einbautiefe erheblich reduziert werden.

## Patentansprüche

1. Halterungsvorrichtung, insbesondere für Getränkedosen, -flaschen und Trinkgefäße in Kraftfahrzeugen, bestehend aus einem Gehäuse und einem in dem Gehäuse versenkbaren Halterungsteil mit Aufnahmeöffnungen (3, 4) für die zu haltenden Behältnisse, wobei das Gehäuse (1) aus einem Boden (12), einer Rückwand (15) und zwei Seitenwänden (13,14) besteht und mittig an der Rückwand (15) ein parallel zu den Seitenwänden (13,14) verlaufendes stabförmiges Führungselement (16) biegesteif befestigt ist, das in seiner Länge 5 bis 10 % kürzer ist als die Gehäusetiefe a und an seinem freien Ende einen Anschlagbund (18) aufweist, und in einer axialbeweglichen Hülse (17) geführt ist, wobei die Schubbewegung der Hülse (17) in Ausziehrichtung des Halterungsteiles (2) durch den Anschlagbund (18) über einen ersten Anschlag (21) begrenzt ist, und die Hülse (17) mittig in dem Halterungsteil (2) zwischen den benachbarten Aufnahmeöffnungen (3,4) für die Behältnisse versenkbar angeordnet ist, wobei die Hülse (17) an dem in Ausziehrichtung zeigenden Ende einen Anschlagbund (19) aufweist, durch den die Schubbewegung des Halterungsteiles (2) in Ausziehrichtung über einen zweiten Anschlag (22) begrenzt ist, wobei die beiden Anschläge (21, 22) so aufeinander abgestimmt sind, daß die maximale Schubbewegung I des Halterungsteiles (2) in Ausziehrichtung um einen Betrag von 10 bis 20 % kürzer ist als die Gehäusetiefe a.

2. Halterungsvorrichtung nach Anspruch 1, **dadurch gekennzeichnet, daß** das stabförmige Führungselement (16) und die Hülse (17) an ihren in Ausziehrichtung zeigenden Enden jeweils einen Anschlagbund (18,19) besitzen, die Hülse (17) und die Führung (20) des Halterungsteiles (2) jeweils durch einen als Anschlag dienenden Absatz (21, 22) getrennte Abschnitte unterschiedlicher Innendurchmesser aufweisen, wobei in Ausziehrichtung die Bewegung der Hülse (17) durch die beiden zur Anlage gelangenden Anschläge (21,18) des Führungselementes (16) und der Hülse (17) und die Bewegung des Halterungsteiles (2) durch die beiden zur Anlage gelangenden Anschläge (22, 19) des Halterungsteiles (2) und der Hülse (17) begrenzt ist.

3. Halterungsvorrichtung nach einem der Ansprüche 1 oder 2, **dadurch gekennzeichnet, daß** das Führungselement (16) und die Hülse (17) jeweils einen kreisförmigen Querschnitt aufweisen.

4. Halterungsvorrichtung nach einem der Ansprüche 1 bis 3, **dadurch gekennzeichnet, daß** das Führungselement (16) aus Metall besteht.

5. Halterungsvorrichtung nach einem der Ansprüche 1 bis 3, **dadurch gekennzeichnet, daß** das Führungselement (16) aus Kunststoff besteht.

6. Halterungsvorrichtung nach einem der Ansprüche 1 bis 5, **dadurch gekennzeichnet, daß** in dem Halterungsteil (2) nach unten schwenkbare Bügel (5, 6) befestigt sind, die als Auflage für die in die Aufnahmeöffnungen (3, 4) einsetzbaren Behältnisse dienen.

7. Halterungsvorrichtung nach einem der Ansprüche 1 bis 6, **dadurch gekennzeichnet daß** in den die Aufnahmeöffnungen (3, 4) begrenzenden Randbereichen (8, 9) des Halterungsteiles (2) elastische Klemmelemente (10,11) für die Behältnisse angeordnet sind.

## Claims

1. Holding device, in particular for cans and bottles of drink and drinking vessels in motor vehicles, comprising a housing and a holding part which can be recessed in the housing and has receiving openings (3, 4) for the containers to be held, the housing (1) comprising a base (12), a rear wall (15) and two side walls (13, 14) and in the centre of the rear wall (15) there being fastened, in a manner resistant to bending, a rod-shaped guide element (16) which runs parallel to the side walls (13, 14), is 5 to 10% shorter in length than the housing depth a and, at its free end, has a stop collar (18), and is guided in an axially moveable sleeve (17), the sliding movement of the sleeve (17) being limited in the pull-out direction of the holding part (2) by the stop collar (18) via a first stop (21), and the sleeve (17) being arranged centrally in the holding part (2) in a manner such that it can be recessed between the adjacent receiving openings (3, 4) for the containers, wherein the sleeve (17) has, at the end pointing in the pull-out direction, a stop collar (19) by means of which the sliding movement of the holding part (2) is restricted in the pull-out direction via a second stop (22), the two stops (21, 22) being matched to each other in such a manner that the maximum sliding movement I of the holding part (2) in the pull-out direction is shorter by 10 to 20% than the housing depth a.

2. Holding device according to Claim 1, **characterized in that** the rod-shaped guide element (16) and the sleeve (17) each have a stop collar (18, 19) at their ends pointing in the pull-out direction, and the sleeve (17) and the guide (20) of the holding part (2) each have sections of different inside diameter, which sections are separated by a shoulder (21, 22) serving as a stop, wherein the movement of the sleeve (17) in the pull-out direction is restricted by the two stops (21, 18) of the guide element (16) and the sleeve (17) coming to rest, and the movement of the holding part (2) is restricted by the two stops (22, 19) of the holding part (2) and the sleeve (17) coming to rest.

3. Holding device according to one of Claims 1 or 2, **characterized in that** the guide element (16) and the sleeve (17) each have a circular cross section.

4. Holding device according to one of Claims 1 to 2, **characterized in that** the guide element (16) consists of metal.

5. Holding device according to one of Claims 1 to 3, **characterized in that** the guide element (16) consists of plastic.

6. Holding device according to one of Claims 1 to 5, **characterized in that** downwardly pivotable brackets (5, 6) are fastened in the holding part (2) and serve as a support for the containers which can be inserted into the receiving openings (3, 4).

7. Holding device according to one of Claims 1 to 6, **characterized in that** elastic clamping elements (10, 11) for the containers are arranged in those edge regions (8, 9) of the holding part (2) which bound the receiving openings (3, 4).

## Revendications

1. Dispositif de support pour des boîtes ou des bouteilles de boissons et des récipients à boire dans des véhicules automobiles, se composant d'un boîtier et d'une pièce de support escamotable dans le boîtier, avec des ouvertures de réception (3, 4) pour les récipients à supporter, dans lequel le boîtier (1) se compose d'un fond (12), d'une paroi arrière (15) et de deux parois latérales (13, 14) et un élément de guidage (16) en forme de tige, parallèle aux parois latérales (13, 14), est rigidement fixé au milieu de la paroi arrière (15), dont la longueur est de 5 à 10 % plus courte que la profondeur a du boîtier et qui présente un collet de butée (18) à son extrémité libre, et qui est guidé dans une douille (17) à mouvement axial, dans lequel le mouvement coulissant de la douille (17) dans le sens de la sortie de la pièce de support (2) est limité par le collet de butée (18) contre une première butée (21), et la douille (17) est disposée de façon escamotable au milieu de la pièce de support (2) entre les ouvertures de réception voisines (3, 4), la douille (17) présentant à son extrémité dirigée dans le sens de la sortie un collet de butée (19), par lequel le mouvement coulissant de la pièce de support (2) dans le sens de la sortie est limité par une seconde butée (22), les deux butées (21, 22) étant adaptées l'une à l'autre de manière telle que le mouvement coulissant maximal 1 de la pièce de support (2) dans le sens de la sortie soit plus court d'une distance de 10 à 20 % que la profondeur a du boîtier.

2. Dispositif de support suivant la revendication 1, **caractérisé en ce que** l'élément de guidage en forme de tige (16) et la douille (17) possèdent chaque fois un collet de butée (18, 19) à leurs extrémités dirigées dans le sens de la sortie, la douille (17) et le guide (20) de la pièce de support (2) présentent des portions de diamètres intérieurs différents chaque fois séparées par un décrochement (21, 22) servant de butée, le mouvement de la douille (17) dans le sens de la sortie étant limité par les deux butées (21, 18) de l'élément de guidage (16) et de la douille (17) arrivant en contact et le mouvement de la pièce de support (2) étant limité par les deux butées (22, 19) de la pièce de support (2) et de la douille (17) arrivant en contact.

3. Dispositif de support suivant l'une des revendications 1 ou 2, **caractérisé en ce que** l'élément de guidage (16) et la douille (17) présentent chaque fois une section transversale circulaire.

4. Dispositif de support suivant l'une des revendications 1 ou 2, **caractérisé en ce que** l'élément de guidage (16) est en métal.

5. Dispositif de support suivant l'une quelconque des revendications 1 à 3, **caractérisé en ce que** l'élément de guidage (16) est en matière plastique.

6. Dispositif de support suivant l'une quelconque des revendications 1 à 5, **caractérisé en ce que** des arceaux (5, 6) pivotant vers le bas sont fixés dans la pièce de support (2) et servent d'appui pour les récipients à introduire dans les ouvertures de réception (3, 4).

7. Dispositif de support suivant l'une quelconque des revendications 1 à 6, **caractérisé en ce que** des éléments de serrage élastiques (10, 11) pour les récipients sont disposés dans les parties du bord (8, 9) de la pièce de support (2) délimitant les ouvertures de réception (3, 4).
